# EUROPÄISCHE PATENTANMELDUNG

(11) **EP 2 208 657 A2**
(43) Veröffentlichungstag der Anmeldung: **21.07.2010**
(21) Anmeldenummer: 10000060.3
(22) Anmeldetag: 07.01.2010
(51) Int. Cl.: B62B 1/14

(54) **Entladevorrichtung für eine Sackkarre**

(30) Priorität: 08.01.2009 DE 102009004044
(71) Anmelder: Bermes, Manfred, 55286 Wörrstadt (DE); Weiss, Klaus-Dieter, 35599 Gau-Bickelheim (DE)
(72) Erfinder: Weiss, Klaus-Dieter, 35599 Gau-Bickelheim (DE)
(74) Vertreter: Becker, Bernd

(57) **Zusammenfassung**

Eine Entladevorrichtung für eine Sackkarre mit einer bodennahen Ladeplatte (3), die an zwei zueinander beabstandeten Holmen (1) befestigt ist, umfasst einen Schieber (7), der über ein Hebelgestänge (8) von einer Ausgangslage, in der er an den Holmen (1) anliegt, in eine Endlage im Bereich des freien Endes (9) der Ladeplatte (3) verlagerbar ist.

## Beschreibung

Die Erfindung bezieht sich auf eine Entladevorrichtung für eine Sackkarre mit einer bodennahen Ladeplatte, die an zwei zueinander beabstandeten Holmen befestigt ist.

Eine bekannte Sackkarre umfasst eine Ladeplatte, auf der die zu befördernde Last aufliegt, die an zwei durch Querstreben ausgesteiften Holmen befestigt ist. In der Regel sind zwei Räder vorgesehen, deren Achse einen Drehpunkt zum Verschwenken der Sackkarre zum Transport der Last bildet. Für die Handhabung einer zweirädrigen Sackkarre ist es charakteristisch, dass sie im beladenen Zustand von dem Bediener mit zwei Händen geführt werden muss. Um Lasten von der Ladeplatte zu entfernen, muss der Bediener häufig mit einer Hand an der Last angreifen und mit der anderen Hand die Sackkarre entfernen, was insbesondere bei einer relativ schweren Last nur mit einigem Kraftaufwand und Geschick zu bewerkstelligen ist.

Es ist Aufgabe der Erfindung, eine Entladevorrichtung der eingangs genannten Art zu schaffen, die eine relativ einfache Handhabung der Sackkarre ermöglicht.

Erfindungsgemäß wird die Aufgabe dadurch gelöst, dass ein Schieber über ein Hebelgestänge von einer Ausgangslage, in der er an den Holmen anliegt, in eine Endlage im Bereich des freien Endes der Ladeplatte verlagerbar ist.

Der Schieber mit dem Hebelgestänge lässt sich, da es sich um mechanisch verhältnismäßig einfache Bauteile handelt, an eine handelsübliche Sackkarre montieren, wobei die Montage sowohl werksseitig als auch nachträglich vorgenommen werden kann. Durch eine Betätigung des Hebelgestänges, das beispielsweise ein Fußpedal umfasst, wird der Schieber derart in seiner Lage verändert, dass er Gegenstände von der Ladeplatte abstreift. Wird beispielsweise ein Stapel Kisten mit der Sackkarre transportiert, der eine Höhe aufweist, die in etwa der Höhe der Sackkarre entspricht, kann der Stapel durch eine Betätigung des Schiebers über das Hebelgestänge mit dem Fuß bequem von der Ladeplatte geschoben werden, wobei der Benutzer die Sackkarre mit beiden Händen in einem sicheren Stand halten kann.

In Ausgestaltung ist der Schieber als eine Platte ausgebildet, die über eine Linearführung mit einem ersten Hebelarm eines zweiarmigen Hebels in Verbindung steht, dessen zweiter Hebelarm als Fußbetätiger ausgebildet ist. Demnach weist die Entladevorrichtung einen robusten und mechanisch einfachen Aufbau auf. Über den plattenförmigen Schieber findet eine Lastverteilung statt und das Hebelgestänge ermöglich das Verlagern schwerer Gegenstände unter einem geringen Krafteinsatz.

Vorzugsweise ist der zweiarmige Hebel auf einer zwischen den beiden Holmen befestigbaren Drehachse schwenkbar gelagert. Die Drehachse kann von den Holmen der Sackkarre gelöst werden und die Entladevorrichtung ist anschließend separat handhabbar. Zweckmäßigerweise ist der erste Hebelarm an einem Außenrohr der Drehachse und der zweite Hebelarm an dem ersten Hebelarm befestigt. Selbstverständlich können auch beide Hebelarme an dem Außenrohr festgelegt sein.

Um die Drehachse zwischen den beiden Holmen, beispielsweise mittels axialer Schrauben und Bohrungen in den Holmen, zu befestigen, ist vorteilhafterweise das Außenrohr der Drehachse drehbar auf einer Innenachse gelagert, wobei die Innenachse senkrecht zu den beiden Holmen festlegbar ist. Zwischen dem Außenrohr und der Innenachse können Lagerelemente, insbesondere Gleitlager, angeordnet sein.

Nach einer Weiterbildung ist die Innenachse mit den Holmen verschweißt, verschraubt oder verklemmt. Bei einem werkseitigen Anbau der Entladevorrichtung an eine Sackkarre ist die Verbindung der Innenachse mit den Holmen mittels Verschweißen oder Verschrauben relativ einfach zu bewerkstelligen. Handelt es sich bei der Entladevorrichtung um einen Nachrüstsatz, kann sie beispielsweise mittels Klipsverbindungen oder Rohrschellen an den Holmen angebracht werden.

Um eine Anpassung der Entladevorrichtung an unterschiedlichen Sackkarren zu ermöglichen, sind vorzugsweise das Außenrohr und/oder die Innenachse der Drehachse teleskopierbar ausgebildet.

Zur Erhöhung der Stabilität der Entladevorrichtung umfasst in weiterer Ausgestaltung jeder Hebelarm des zweiarmigen Hebels zwei parallel und beabstandet zueinander angeordnete Schenkel, wobei die freien Enden der Schenkel des ersten Hebelarms mit der Linearführung zusammenwirken und die freien Enden der Schenkel des zweiten Hebelarms zur Ausbildung des Fußbetätigers über ein Rohr miteinander verbunden sind. Damit eine robuste und schmutzunempfindliche Verbindung zwischen dem Hebelgestänge und dem Schieber realisiert ist, umfasst die Linearführung im Wesentlichen C-förmige Schienen in denen Gleitplatten gelagert sind, wobei die Schienen dem Schieber und die Gleitplatten den freien Enden der Schenkel des ersten Hebels zugeordnet sind.

Um den Schieber in seiner Ausgangslage zu halten bzw. in diese zurückzustellen, ist vorteilhafterweise dem Hebelgestänge mindestens eine Rückstellfeder zur Verlagerung des Schiebers in die Ausgangslage und/oder mindestens eine mit dem Schieber verbundene Zugfeder zugeordnet.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigt:

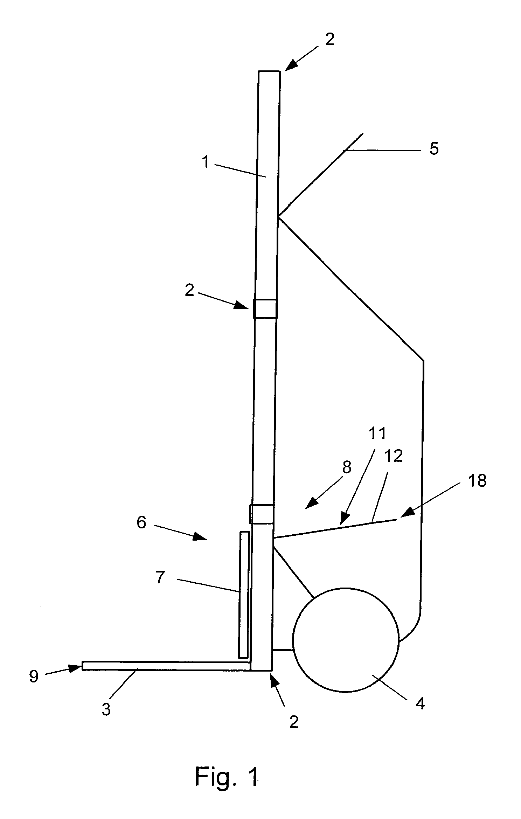

- Fig.1: eine schematische Seitenansicht einer Sackkarre mit einer erfindungsgemäßen Entladevorrichtung,

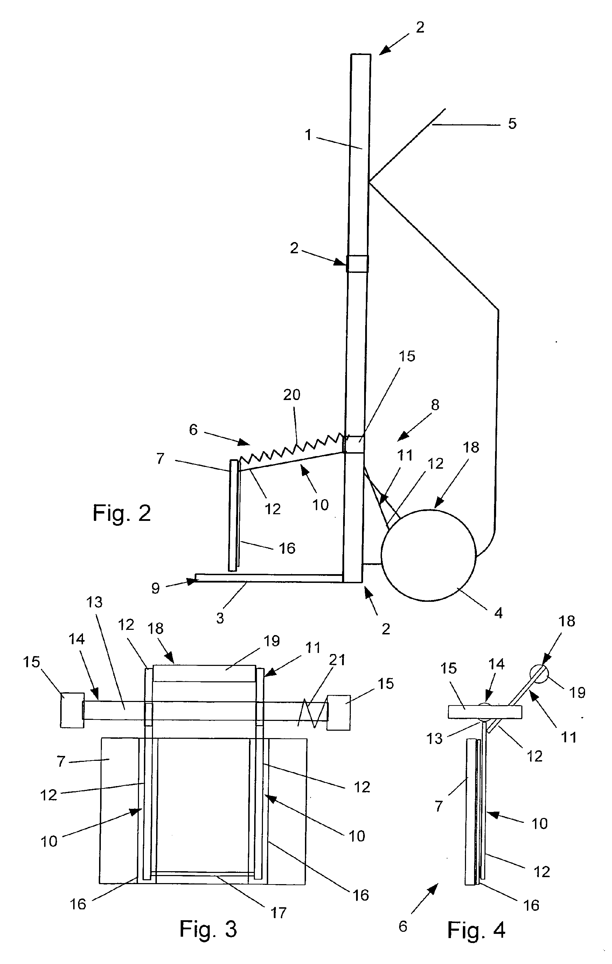

- Fig.2: eine weitere schematische Seitenansicht der Sackkarre nach Fig. 1,
- Fig.3: eine schematische Rückansicht der Entladevorrichtung und
- Fig.4: eine schematische Seitenansicht der Entladevorrichtung.

Die Sackkarre umfasst im Wesentlichen zwei Holme 1, die durch Querverstrebungen 2 versteift sind und in ihrem unteren Bereich eine Ladeplatte 3 zur Aufnahme einer zu transportierenden Last und zwei auf einer Achse angeordnete Räder 4 aufweisen. Im Weiteren ist jeder Holm 1 mit einem Handgriff 5 verbunden. Zum Entladen der Sackkarre ist eine Entladevorrichtung 6 vorgesehen, die einen Schieber 7 umfasst, der über ein Hebelgestänge 8 von einer Ausgangslage, in der er an den Holmen 1 anliegt, in eine Endlage im Bereich des freien Endes 9 der Ladeplatte 3 verlagerbar ist. Das Hebelgestänge 8 ist durch einen zweiarmigen Hebel gebildet, wobei sowohl ein erster Hebelarm 10 als auch ein zweiter Hebelarm 11 des zweiarmigen Hebels jeweils zwei parallel und beabstandet zueinander angeordnete Schenkel 12 umfasst. Der erste Hebelarm 10 ist an einem Außenrohr 13 einer Drehachse 14 und der zweite Hebelarm 11 an dem ersten Hebelarm 10 befestigt, wobei eine das Außenrohr 13 drehbar lagernde Innenachse stirnseitig jeweils eine Rohrschelle 15 zur Befestigung zwischen den Holmen 1 aufweist.

Für die Verbindung des Hebelgestänges 8 mit dem plattenförmigen Schieber 7 sind dem Schieber 7 zwei C-förmige Schienen 16 als Linearführung zugeordnet, in denen Gleitplatten gelagert sind, die an den freien Enden der Schenkel 12 des ersten Hebels 10 drehbar angeordnet sind. Im Bereich der freien Enden der Schenkel 12 des ersten Hebels 10 ist eine stabilisierende Querstange 17 vorgesehen. Die freien Enden der Schenkel 12 des zweiten Hebelarms 11 sind zur Ausbildung eines Fußbetätigers 18 über ein Rohr 19 miteinander verbunden.

Soll beispielsweise ein Stapel Kisten von der Ladeplatte 3 entfernt werden, dann tritt ein Benutzer der Sackkarre den Fußbetätiger 18 nach unten und der Schieber 7 verfährt aus seiner Ausgangslage, in der er an den Holmen 1 anliegt, entgegen der Wirkung von Zugfedern 20, die zwischen dem Schieber 7 und der Drehachse 14 angeordnet sind, und einer als Drehschenkelfeder ausgebildeten Rückstellfeder 21, die zwischen einem der Holme 1 und dem Hebelgestänge wirkt, nach vorn in seine Endlage in Richtung des freien Endes 9 der Ladeplatte 3, wobei der Stapel Kisten von der Ladeplatte 3 geschoben wird. Nachdem der Benutzer seinen Fuß von dem Rohr 19 genommen hat, kehrt der Schieber 7 aufgrund der Wirkung der Zugefedern 20 und der Rückstellfeder 21 in seine Ausgangslage zurück.

## Patentansprüche

1. Entladevorrichtung für eine Sackkarre mit einer bodennahen Ladeplatte (3), die an zwei zueinander beabstandeten Holmen (1) befestigt ist, **dadurch gekennzeichnet, dass** ein Schieber (7) über ein Hebelgestänge (8) von einer Ausgangslage, in der er an den Holmen (1) anliegt, in eine Endlage im Bereich des freien Endes (9) der Ladeplatte (3) verlagerbar ist.

2. Entladevorrichtung nach Anspruch 1, **dadurch gekennzeichnet, dass** der Schieber (7) als eine Platte ausgebildet ist, die über eine Linearführung mit einem ersten Hebelarm (10) eines zweiarmigen Hebels in Verbindung steht, dessen zweiter Hebelarm (11) als Fußbetätiger (18) ausgebildet ist.

3. Entladevorrichtung nach Anspruch 2, **dadurch gekennzeichnet, dass** der zweiarmige Hebel auf einer zwischen den beiden Holmen (1) befestigbaren Drehachse (14) schwenkbar gelagert ist.

4. Entladevorrichtung nach Anspruch 2 oder 3, **dadurch gekennzeichnet, dass** der erste Hebelarm (10) an einem Außenrohr (13) der Drehachse und der zweite Hebelarm (11) an dem ersten Hebelarm (10) befestigt ist.

5. Entladevorrichtung nach Anspruch 4, **dadurch gekennzeichnet, dass** das Außenrohr (13) der Drehachse (14) drehbar auf einer Innenachse gelagert ist, wobei die Innenachse senkrecht zu den beiden Holmen (1) festlegbar ist.

6. Entladevorrichtung nach Anspruch 5, **dadurch gekennzeichnet, dass** die Innenachse mit den Holmen (1) verschweißt, verschraubt oder verklemmt ist.

7. Entladevorrichtung nach einem der Ansprüche 4 bis 6, **dadurch gekennzeichnet, dass** das Außenrohr (13) und/oder die Innenachse der Drehachse (14) teleskopierbar ausgebildet sind.

8. Entladevorrichtung nach einem der Ansprüche 2 bis 7, **dadurch gekennzeichnet, dass** jeder Hebelarm (10, 11) des zweiarmigen Hebels zwei parallel und beabstandet zueinander angeordnete Schenkel (12) umfasst, wobei die freien Enden der Schenkel (12) des ersten Hebelarms (10) mit der Linearführung zusammenwirken und die freien Enden der Schenkel (12) des zweiten Hebelarms (11) zur Ausbildung des Fußbetätigers (18) über ein Rohr (19) miteinander verbunden sind.

9. Entladevorrichtung nach einem der Ansprüche 2 bis 8, **dadurch gekennzeichnet, dass** die Linearführung im Wesentlichen C-förmige Schienen (16) umfasst, in denen Gleitplatten gelagert sind, wobei die Schienen (16) dem Schieber (7) und die Gleitplatten den freien Enden der Schenkel (12) des ersten Hebels (10) zugeordnet sind.

10. Entladevorrichtung nach einem der Ansprüche 1 bis 9, **dadurch gekennzeichnet, dass** dem Hebelgestänge (8) mindestens eine Rückstellfeder (21) zur Verlagerung des Schiebers (7) in die Ausgangslage und/oder mindestens eine mit dem Schieber (7) verbundene Zugfeder (20) zugeordnet ist.
